# EUROPEAN PATENT APPLICATION

(11) **EP 2 046 033 A2**
(43) Date of publication of application: **08.04.2009**
(21) Application number: 08165467.5
(22) Date of filing: 30.09.2008
(51) Int. Cl.: H04N 7/16

(54) **Broadcast receiver and system information processing method**

(30) Priority: 01.10.2007 US 976492 P
(71) Applicant: LG Electronics Inc., Seoul 150-721 (KR)
(72) Inventor: Lee, Joon Hui, Seocho-gu, Seoul 137-724 (KR); Cha, Sang Hoon, Seocho-gu, Seoul 137-724 (KR); Song, Jae Hyung, Seocho-gu, Seoul 137-724 (KR)
(74) Representative: Cabinet Plasseraud

(57) **Abstract**

A broadcast receiver and a system information processing method are disclosed. The broadcast receiver includes a receiver for receiving entitlement management message (EMM) transfer information including information for reception of an EMM over a cable, a network interface for transmitting and receiving data over Internet, and a controller for parsing the received EMM transfer information to determine whether the EMM is applied, and, when the EMM is applied, identifying a transfer method included in the EMM transfer information and controlling the EMM reception through at least one of the receiver and network interface based on the identified transfer method.

## Description

This application claims the benefit of the U.S. Provisional Application No. 60/976,492, filed on October 1, 2007, which is hereby incorporated by reference as if fully set forth herein.

### BACKGROUND OF THE INVENTION

### Field of the Invention

The present invention relates to broadcast data processing methods, and more particularly, to a broadcast receiver and a system information processing method.

### Discussion of the Related Art

Existing broadcasting services have been provided in such a manner that contents produced by broadcasting companies are transmitted through radio transmission media, such as terrestrial waves, cables or satellites, and the user watches the transmitted contents through a broadcast receiver capable of receiving the transmitted contents via the respective transmission media.

However, as digital broadcasting technologies based on digital broadcasting are developed and are commercially available, breaking from existing analog broadcasting, various content services, such as real-time broadcasts, Contents on Demand (CoD), games and news, can be provided to the user using an Internet network connected to each home, besides the existing transmission media.

An Internet Protocol television (IPTV) may be taken as an example of the provision of content services using the Internet network. The IPTV refers to transmitting and providing various information services, moving image contents, broadcasts, etc. to the user's receiver using the Internet network. The Internet network can be implemented based on an Internet Protocol (IP) on various networks including an optical cable network, coaxial cable network, Fiber To The Home (FTTH), telephone network, wireless network, etc.

In the provision of services using the Internet network, as mentioned above, differently from general terrestrial broadcasting, etc., bidirectionality can be additionally provided and the user can watch a desired content service at his/her convenient time.

### SUMMARY OF THE INVENTION

Accordingly, the present invention is directed to a broadcast receiver and a system information processing method that substantially obviate one or more problems due to limitations and disadvantages of the related art.

An object of the present invention is to provide a broadcast receiver and a system information processing method which can process system information.

Another object of the present invention is to provide a broadcast receiver and a system information processing method which can process system information to efficiently receive user authority information.

Another object of the present invention is to provide a broadcast receiver and a system information processing method which can process system information to efficiently set up a channel.

A further object of the present invention is to provide a broadcast receiver and a system information processing method which can process services provided over a terrestrial/satellite/cable/IP network.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a broadcast receiver comprises: a receiver for receiving entitlement management message (EMM) transfer information including information for reception of an EMM over a cable; a network interface for transmitting and receiving data over Internee; and a controller for parsing the received EMM transfer information to determine whether the EMM is applied, and, when the EMM is applied, identifying a transfer method included in the EMM transfer information and controlling the EMM reception through at least one of the receiver and network interface based on the identified transfer method. Here, the EMM transfer information may include at least one of transfer method information indicating a method which receives the EMM, resolution information about an Internet Protocol (IP) address, information about a target IP address for requesting the EMM in a PULL mode, information about a source IP address which provides an IP service, and information about a destination IP address to which the IP service is multicast.

When the transfer method is an IP-based method, the controller may perform a control operation to receive the EMM based on IP address information included in the EMM transfer information.

The receiver may further receive a descriptor including at least one of service provider identification information and content originator identification information.

The receiver may further receive IP service transfer information including information for reception of an IP service over the cable, and the controller may control a connection to a service source which provides the IP service, based on the information included in the IP service transfer information. Here, the IP service transfer information may include at least one of resolution information about an IP address, encapsulation information indicating IP MPEG-2 encapsulation, information about a port for receiving the IP service, information about a source IP address which provides the IP service, and information about a destination IP address to which the IP service is multicast.

At least one of the IP service transfer information and the EMM transfer information may be transmitted in a network_info_table (NIT).

In another aspect of the present invention, a system information processing method comprises: receiving entitlement management message (EMM) transfer information including information for reception of an EMM over a cable; parsing the received EMM transfer information to determine whether the EMM is applied; identifying a transfer method included in the EMM transfer information when the EMM is applied; and receiving the EMM through at least one of an Internet Protocol (IP) network and the cable based on the identified transfer method. Here, the EMM transfer information may include at least one of transfer method information indicating a method which receives the EMM, resolution information about an IP address, information about a target IP address for requesting the EMM in a PULL mode, information about a source IP address which provides an IP service, and information about a destination IP address to which the IP service is multicast.

The step of receiving the EMM may comprise receiving the EMM based on IP address information included in the EMM transfer information when the transfer method is an IP-based method.

The system information processing method may further comprise: receiving IP service transfer information including information for reception of an IP service over the cable; and connecting to a service source which provides the IP service, based on the information included in the IP service transfer information. Here, the IP service transfer information may include at least one of resolution information about an IP address, encapsulation information vindicating IP MPEG-2 encapsulation, information about a port for receiving the IP service, information about a source IP address which provides the IP service, and information about a destination IP address to which the IP service is multicast.

At least one of the IP service transfer information and the EMM transfer information may be transmitted in a network_info_table (NIT).

In a further aspect of the present invention, a system information processing method comprises: generating entitlement management message (EMM) transfer information including information for reception of an EMM using at least one of an Internet Protocol (IP)-based method and an Out Of Band (OOB) method; modulating the generated EMM transfer information to obtain a broadcast signal; and transmitting the obtained broadcast signal over a cable.

The system information processing method may further comprise: generating IP service transfer information including information for reception of an IP service; modulating the generated IP service transfer information to obtain a broadcast signal; and transmitting the obtained broadcast signal over the cable.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a view showing a preferred embodiment of an IPTV system according to the present invention;

FIGs. 2A and 2B are views schematically illustrating a multicast mode and a unicast mode, respectively;

FIG. 3 is a view showing a preferred embodiment of the syntax structure of an SVCT according to the present invention;

FIG. 4 is a view showing a preferred embodiment of the syntax structure of a VCM according to the present invention;

FIG. 5 is a view showing a preferred embodiment of the syntax structure of Virtual_channel according to the present invention;

FIG. 6 is a view showing a preferred embodiment of the syntax structure of an NIT according to the present invention;

FIG. 7 is a table illustrating descriptions of the types of the NIT according to the present invention;

FIG. 8 is a view showing a preferred embodiment of the syntax structure of an IP defined subtable (IPDS) record format according to the present invention;

FIG. 9 is a view showing a preferred embodiment of the syntax structure of an EMM defined subtable (EMMDS) record format according to the present invention;

FIG. 10 is a table illustrating a description of an EMM transfer method according to the present invention;

FIG. 11 is a view showing a preferred embodiment of the syntax structure of a logical channel number descriptor according to the present invention;

FIG. 12 is a table illustrating descriptions of values which are allocated to a channel_identifier_indicator field of the logical channel number descriptor of FIG. 11;

FIG. 13 is a block diagram showing the configuration of a preferred embodiment of a broadcast receiver according to the present invention; and

FIG. 14 is a flowchart illustrating a preferred embodiment of a system information processing process according to the present invention.

### DESCRIPTION OF SPECIFIC EMBODIMENTS

Reference will now be made in detail to the preferred embodiments of the present invention, examples of which are illustrated in the accompanying drawings. Wherever possible, the same reference numbers will be used throughout the drawings to refer to the same or like parts. In the following description of the present invention, a detailed description of known functions and configurations incorporated herein will be omitted when it may make the subject matter of the invention rather unclear.

Although terms used in the present invention are possibly selected from the currently well-known ones, some terms are arbitrarily chosen by the inventor in some cases so that their meanings are explained in detail in the following description. Hence, the present invention should be understood with the intended meanings of the corresponding terms chosen by the inventor instead of the simple names or meanings of the terms themselves.

Hereinafter, a broadcast receiver and a channel information processing method according to the present invention will be described in detail with reference to the annexed drawings.

An Internet Protocol television (IPTV) system, which is an example of a system capable of providing various contents using an Internet network, can be broadly divided into a server, a network, and a receiver(client).

The server of the IPTV system includes servers taking charge of various functions, such as a service discovery & selection information server, a streaming server, a contents guide information server, a customer information server and a payment information server.

The streaming server, among these servers, transmits moving image data encoded in moving picture experts group (MPEG)2, MPEG4 or the like, stored therein, to the user over the network. A real-time transport protocol (RTP), RTP control protocol (RTCP), etc. may be used as protocols for the transmission.

Using a real-time streaming protocol (RTSP), the streaming server may control playback of a moving image stream to some degree through a function called Network Trick Play, including Pause, Replay, Stop, etc.

The contents guide information server is a server that provides information about various contents. The contents guide information corresponds to electronic program guide (EPG) information and includes various information about contents. The contents guide information server stores contents guide information data and provides the stored data to the receiver.

The service discovery & selection information server provides the receiver with connection information, playback information, etc. about servers providing various content services such as broadcasting, Contents On Demand (COD) and games.

The network of the IPTV system includes an Internet-based network, and gateways. The Internet-based network can be implemented based on an IP on various networks including an optical cable network, coaxial cable network, Fiber To The Home (FTTH), telephone network, wireless network, etc. The gateways can perform multicast group management using an Internet group management protocol (IGMP) and other protocols, Quality of Service (QoS) management and so forth, as well as general data transfer.

The receiver of the IPTV system refers to a receiver capable of receiving data transmitted over the Internet network and providing the received data to the user. The receiver may be, for example, an IPTV settop, homenet gateway, or IPTV-embedded TV.

In the case where the IPTV system is of a hybrid type, it can provide various contents of the Internet, as well as various existing broadcast contents. That is, the IPTV system can provide the user with various broadcast contents, such as a terrestrial broadcast, cable broadcast, satellite broadcast and private broadcast, or various Internet image contents and data contents, etc. These contents may be provided in real time or on demand.

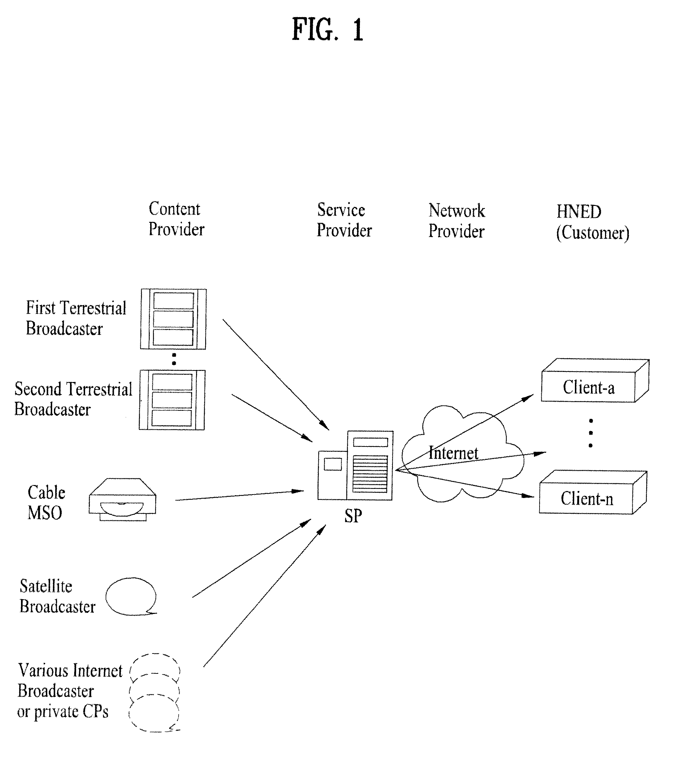

FIG. 1 shows a preferred embodiment of an IPTV system according to the present invention.

Referring to FIG. 1, in terms of provision of a content service, the IPTV system can be divided into a content provider (CP), service provider (SP), network provider (NP), and user.

The content provider creates and provides various contents. The content provider may include, as shown in FIG. 1, a terrestrial broadcaster, a cable system operator (SO) or multiple system operator (MSO), a satellite broadcaster, an Internet broadcaster, etc.

The service provider packages the contents provided from the content provider into a service and provides the packaged service. For example, the service provider of FIG. 1 packages a first terrestrial broadcast, a second terrestrial broadcast, a cable MSO broadcast, a satellite broadcast, a variety of Internet broadcasts, etc. into a service and provides the packaged service to the user.

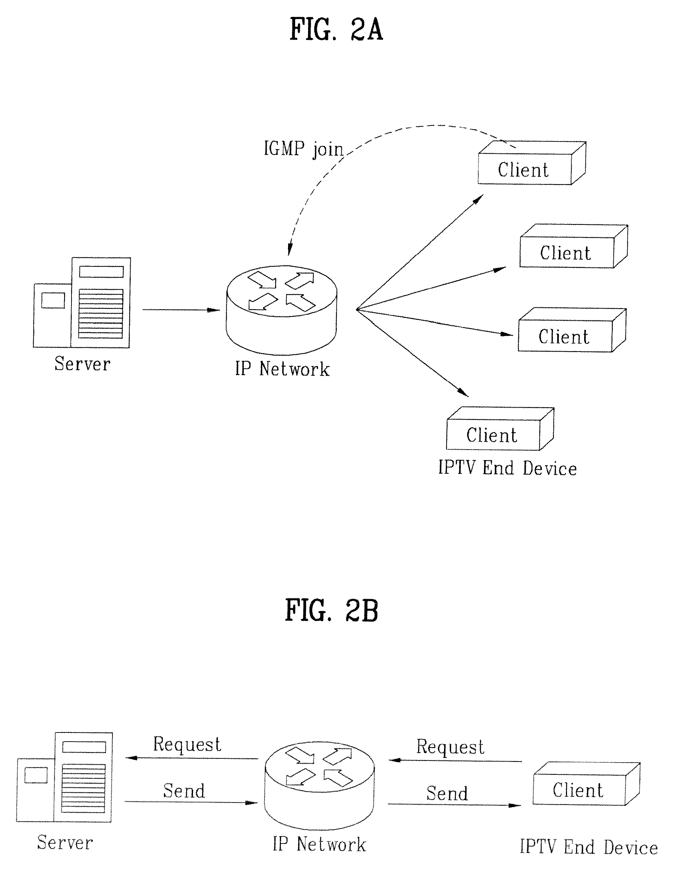

The service provider provides the service to the user using a unicast mode or multicast mode. FIG. 2A and FIG. 2B schematically illustrate the multicast mode and the unicast mode, respectively. The unicast mode is a mode where data is transmitted between one sender and one recipient in a 1:1 manner. For example, in the unicast mode, if a receiver requests data of a server, the server transmits the data to the receiver in response to the request. The multicast mode is a mode where data is transmitted to a specific group of recipients. For exampled, in the multicast mode, a server can transmit data to a plurality of preregistered receivers at one time. The Internet group management protocol (ICMP), etc. may be used for the multicast registration.

The network provider provides a network for provision of the aforementioned service to the user. The user may construct a home network end user (HNED) to receive the service.

The above-mentioned IPTV system may employ a conditional access, content protection, etc. as means for protection of a content being transmitted. A CableCARD, downloadable conditional access system (DCAS) or the like may be taken as an example of the conditional access or content protection.

In the case where a receiver intends to receive a broadcast content over an IP network, the receiver has to receive system information on the IP network. A receiver according to the present invention may receive system information on an IP network over a cable, and may receive a virtual channel table (VCT)/shortform virtual channel table (SVCT) and a network information table (NIT) including the system information on the IP network.

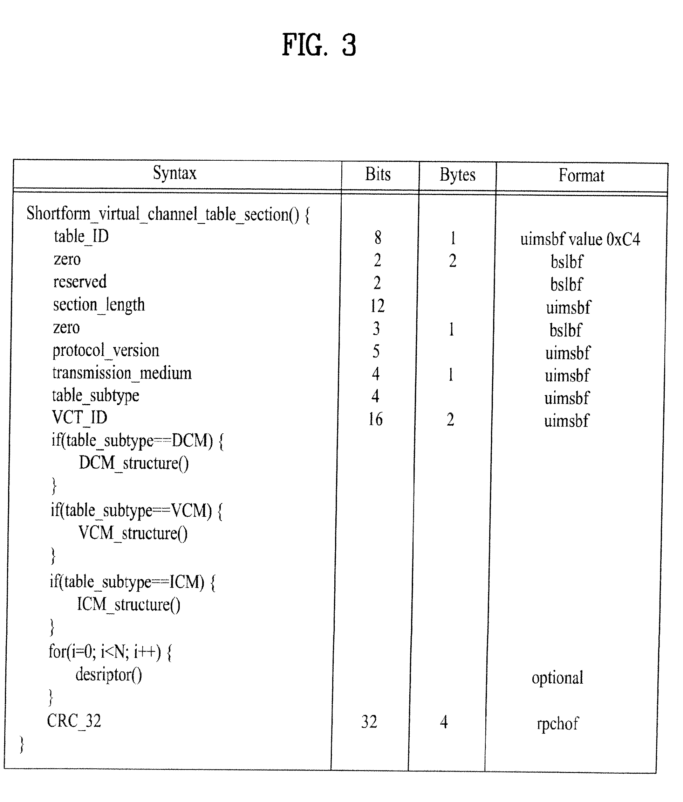

FIG. 3 shows a preferred embodiment of the syntax structure of an SVCT according to the present invention.

Referring to FIG. 3, the shortform_virtual_channel_table_section (SVCT) includes a 'table_ID' field, a 'zero' field, a 'reserved' field, a 'section_length' field, a 'protocol_version' field, a 'transmission_medium' field, a 'table_subtype' field, a 'VCT_ID' field, and a 'CRC_32' field. The SVCT also includes any one of a field indicating DCM_structure() which is a subtable, a field indicating VCM_structure() which is a subtable, and a field indicating ICM_structure() which is a subtable, based on a value contained in the 'table_subtype' field. Also, the SVCT includes N fields indicating descriptor() which is a subtable.

The 'table_ID' field contains table ID information of the SVCT.

The 'zero' field is allocated '00', and the 'reserved' field is a field reserved for future use.

The 'section_length' field contains information about the total size of the SVCT.

The 'protocol_version' field contains protocol version information.

The 'number_of_records' field contains information about the numbed of CDS records or MMS records included in the SVCT.

The 'transmission_medium' field is set to 'Ox0'.

The 'table_subtype' field contains information indicating the type of a map transmitted in the SVCT. The map type may be any one of a virtual channel map, a defined channel map and an inverse channel map.

The 'VCT_ID' field contains information indicating a VCT whose channel definitions are applied in the SVCT.

The 'CRC_32' field contains CRC information.

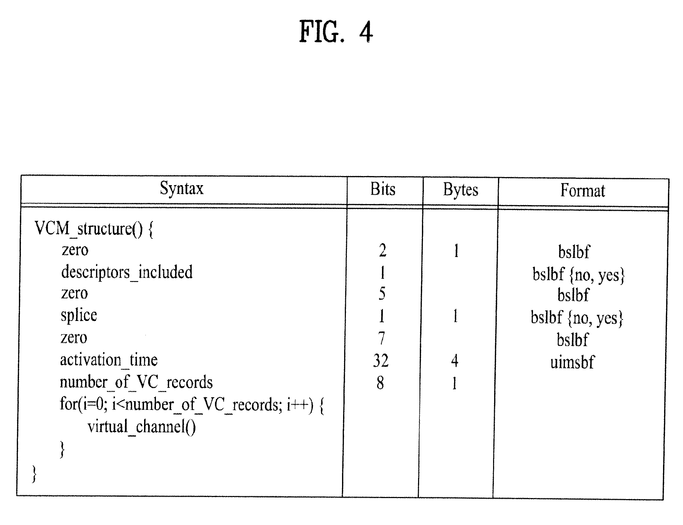

FIG. 4 shows a preferred embodiment of the syntax structure of a VCM according to the present invention.

Referring to FIG. 4, the VCM_structure() includes a 'zero' field, a 'descriptors_included' field, a 'splice' field, an 'activation_time' field, a 'number_of_VC_records' field, and fields indicating virtual_channel() which is a subtable. Here, the number of the virtual_channel() indicating fields is the same as the value of the 'number_of_VC_records' field.

The 'descriptors_included' field contains information indicating whether descriptors are included in the virtual channel map (VCM).

The 'splice' field contains information indicating whether an application for data transmitted in the VCM will be executed at a next MPEG-2 video splice point.

The 'activation_time' field contains information providing an absolute time for which virtual channel data carried in the VCM is available.

The 'number_of_VC_records' field contains information about the number of virtual_channel included in the VCM.

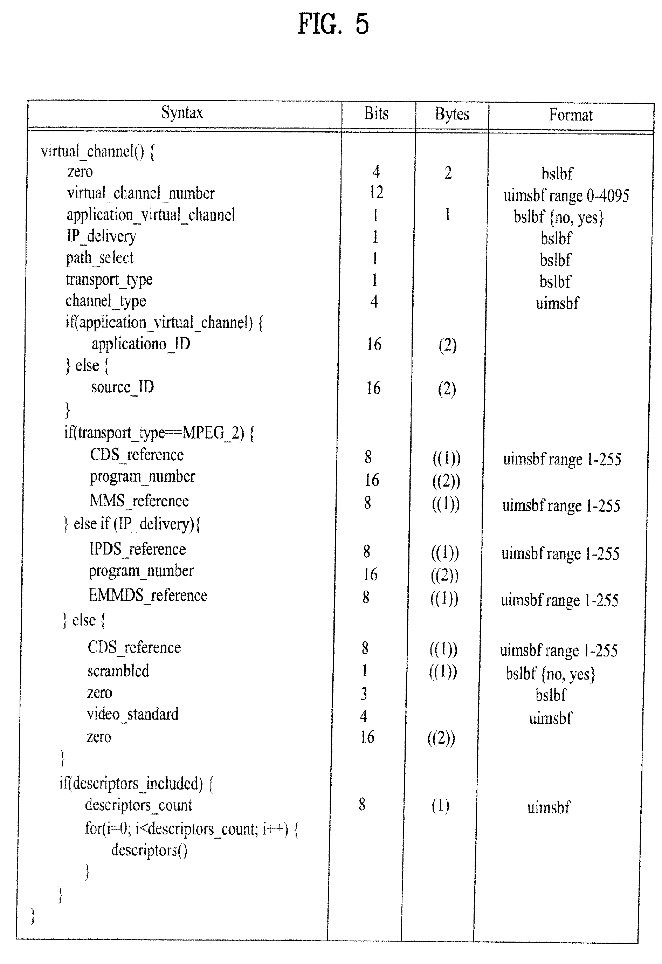

FIG. 5 shows a preferred embodiment of the syntax structure of Virtual_channel according to the present invention.

Referring to FIG. 5, the virtual_channel() includes a 'zero' field, a 'virtual_channel_number' field, an 'application_virtual_channel' field, an 'IP_delivery' field, a 'path_select' field, a 'transport_type' field, and a 'channel_type' field. Also, the virtual_channel() selectively includes an 'application_ID' field or 'source_ID' field based on the value of the 'application_virtual_channel' field. Also, in the case where the value of the 'transport_type' field is MPEG_2, the virtual_channel() includes a 'CDS_reference' field, a 'program_number' field, and an 'MMS_reference' field. In the case where the value of the 'transport_type' field is IP_delivery, the virtual_channel() includes an 'IPDS_reference' field, a 'program_number' field, and an 'EMMDS_reference' field. In the case where the 'transport_type' field has other values, the virtual_channel() includes a 'CDS_reference' field, a 'scrambled' field, a 'zero' field, and a 'video_standard' field. Also, the virtual_channel() includes fields indicating descriptor() which is a subtable, based on the number of descriptors included.

The 'virtual_channel_number' field contains information indicating the number of virtual channels whose definitions are provided in the virtual_channel().

The 'application_virtual_channel' field contains information indicating whether the virtual_channel() defines an access point re-expressed by application_ID. For example, the virtual_channel() includes the 'application_ID' field when '1' is allocated to the 'application_virtual_channel' field, and the 'source_ID' field, otherwise.

The 'IP_delivery' field contains information indicating whether the virtual_channel() is an IP-based virtual channel.

The 'path_select' field contains information associating a virtual channel with a transmission path.

The 'transport_type' field contains information indicating a transport type such as MPEG-2 transport.

The 'channel_type' field contains information defining a channel type.

The 'program_number' field contains information associating a virtual channel number with a service defined in a Program Association and TS Program Map Table section.

The 'CDS_reference' field, 'MMS_reference' field, 'IPDS_reference' field and 'EMMDS_reference' field contain information indicating CDS, MMS, IPDS and EMMDS included in network_info_table_section (NIT), respectively.

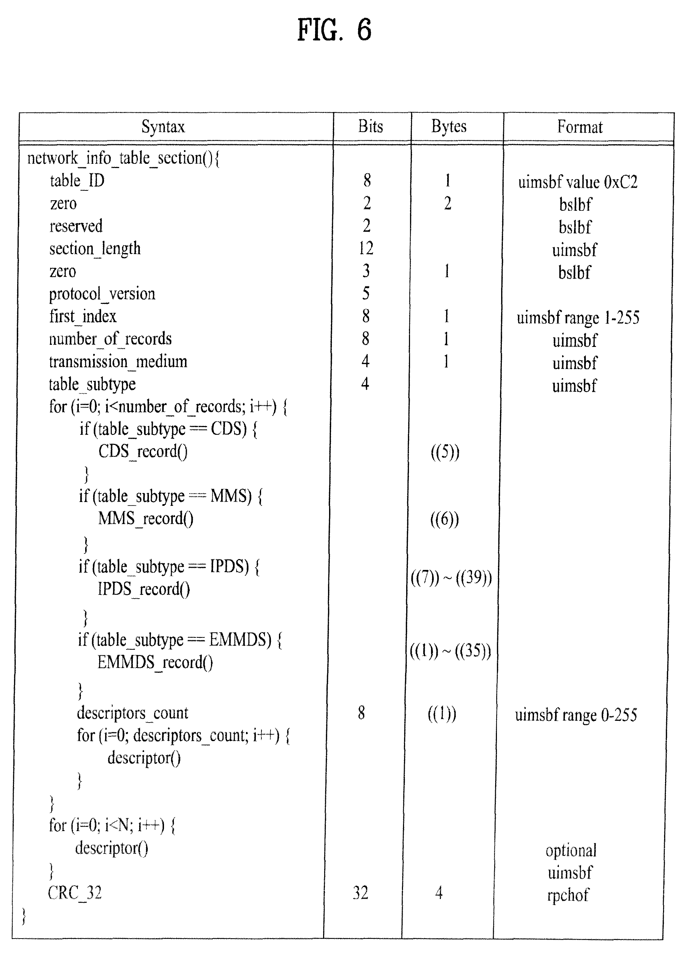

FIG. 6 shows a preferred embodiment of the syntax structure of an NIT according to the present invention.

Referring to FIG. 6, the network_info__table_section (NIT) includes a 'table_ID' field, a 'zero' field, a 'reserved' field, a 'section_length' field, a 'protocol_version' field, a 'first_index' field, a 'number_of_records' field, a 'transmission_medium' field, and a 'table_subtype' field. Also, the network_info_table_section (NIT) selectively includes a field indicating any one of CDS_record(), MMS_record(), IPDS_record() and EMMDS_record() which are subtables, based on the value of the 'table_subtype' field. Together with the field indicating any one of CDS_record(), MMS_record(), IPDS_record() and EMMDS_record(), the NIT also includes fields indicating descriptor() which is a subtable, the number of which is the same as that of descriptors. The NIT may include a plurality of fields indicating any one of CDS_record(), MMS_record(), IPDS_record() and EMMDS_record(), the number of which is the same as the value of the 'number_of records' field. Also, the NIT may include N fields indicating descriptor() which is a subtable.

The 'table_ID' field contains ID information of the network_info_table_section (NIT).

The 'zero' field is allocated '00', and the 'reserved' field is a field reserved for future use.

The 'section_length' field contains information about the total size of the NIT.

The 'protocol_version' field contains protocol version information.

The 'first_index' field contains information indicating an index of a first record defined in the NIT.

The 'transmission_medium' field is set to 'Ox0'.

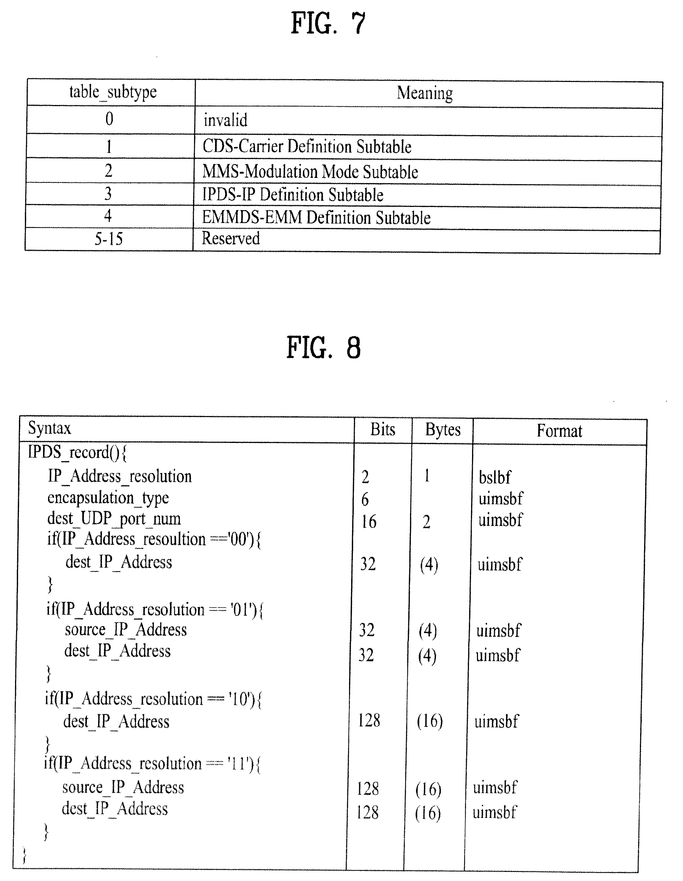

FIG. 7 is a table illustrating descriptions of the types of the NIT according to the present invention.

Referring to FIG. 7, the 'table_subtype' field may have a value of 0 to 15. When the value allocated to the 'table_subtype' field is 0, it indicates the case where is invalid. Also, when the value allocated to the 'table_subtype' field is 1, it indicates the case where a carrier definition subtable (CDS) is defined in the NIT. When the value allocated to the 'table_subtype' field is 2, it indicates the case where a modulation mode subtable (MMS) is defined in the NIT. When the value allocated to the 'table_subtype' field is 3, it indicates the case where an IP definition subtable (IPDS) is defined in the NIT. When the value allocated to the 'table_subtype' field is 4, it indicates the case where an EMM definition subtable (EMMDS) is defined in the NIT.

FIG. 8 shows a preferred embodiment of the syntax structure of an IP defined subtable (IPDS) record format according to the present invention.

Referring to FIG. 8, the IPDS record format includes an 'IP_Address_resolution' field, an 'encapsulation_type' field, and a 'dest_UDP_port_num' field. Also, the IPDS record format includes at least one of a 'dest_IP_Address' field and a 'source_IP_Address' field based on a value allocated to the 'IP_Address_resolution' field.

The 'IP_Address_resolution' field contains information indicating whether a source IP address is used, and information indicating which one of IPv4 and IPv6 is used.

The 'encapsulation_type' field contains encapsulation information indicating IP MPEG-2 encapsulation.

The 'dest_UDP_port num' field contains information about a port for receiving an IP service.

The ;dest_IP_Address' field contains information about a destination IP address to which the IP service is multicast.

The 'source_IP_Address' field contains information about a source IP address which provides the IP service.

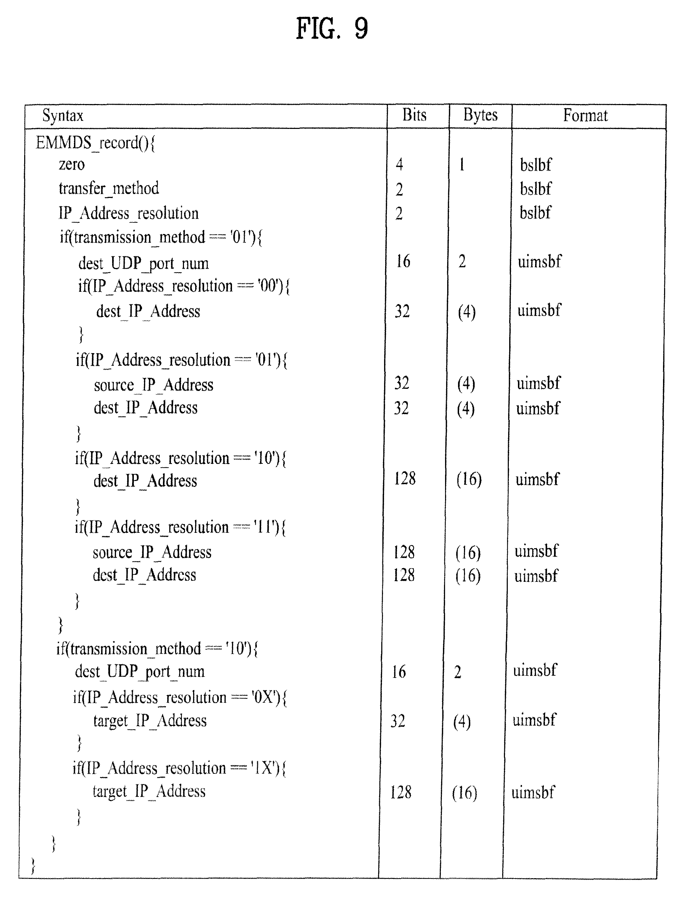

FIG. 9 shows a preferred embodiment of the syntax structure of an EMM defined subtable (EMMDS) record format according to the present invention.

Referring to FIG. 9, the EMMDS record format includes a 'zero' field, a 'transfer_method' field, and an 'IP_Address_resolution' field. The EMMDS record format also includes at least one of a 'dest_IP_Address' field and a 'source_IP_Address' field or a 'target_IP_Address' field based on values allocated to the 'transfer_method' field and 'IP_Address__resolution' field. For example, in the case where the value allocated to the 'transfer_method' field is '01', the EMMDS record format includes a 'dest_IP_Address' field allocated IP address information of IPv4 when the value allocated to the 'IP_Address_resolution' field is '00', a 'source_IP_Address' field and 'dest_IP_Address' field allocated IP address information of IPv4 when the value allocated to the 'IP_Address_resolution' field is '01', a 'dest_IP_Address' field allocated IP address information of IPv6 when the value allocated to the 'IP_Address_resolution' field is '10', and a 'source_IP_Address' field and 'dest_IP_Address' field allocated IP address information of IPv6 when the value allocated to the 'IP_Address_resolution' field is '11'. In the case where the value allocated to the 'transfer_method' field is '10', the EMMDS record format includes a 'target_IP_Address' field allocated IP address information of IPv4 when the value allocated to the 'IP_Address_resolution' field is '00' or '01', and a 'target_IP_Address' field allocated IP address information of IPv6 when the value allocated to the 'IP_Address_resolution' field is '10' or '11'.

The 'IP_Address_resolution' field contains information indicating whether a source IP address is used, and information indicating which one of IPv4 and IPv6 is used.

The 'dest_IP_Address' field contains information about a destination IP address to which an IP service is multicast.

The 'source_IP_Address' field contains information about a source IP address which provides the IP service.

The 'target_IP_Address' field contains information about a target IP address which requests an EMM in a PULL mode.

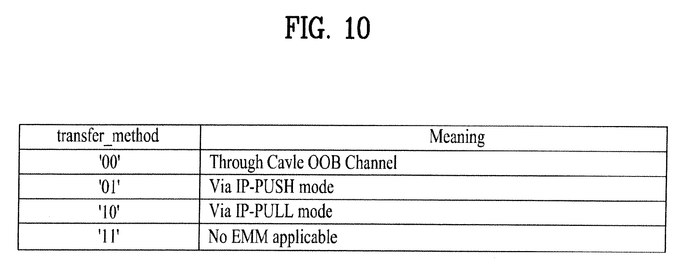

FIG. 10 is a table illustrating a description of an EMM transfer method according to the present invention.

Referring to FIG. 10, a 'transfer_method' field contains transfer method information indicating an entitlement management message (EMM) transfer method. For example, when a value allocated to the 'transfer_method' field is '00', it indicates a method that receives an EMM in an Out Of Band (OOB) mode. When the value allocated to the 'transfer_method' field is '01', it indicates a method that receives an EMM over an IP network in a PUSH mode. When the value allocated to the 'transfer_method' field is '10', it indicates a method that receives an EMM over an IP network in a PULL mode. When the value allocated to the 'transfer_method' field is '11', it indicates the case where no EMM is applied.

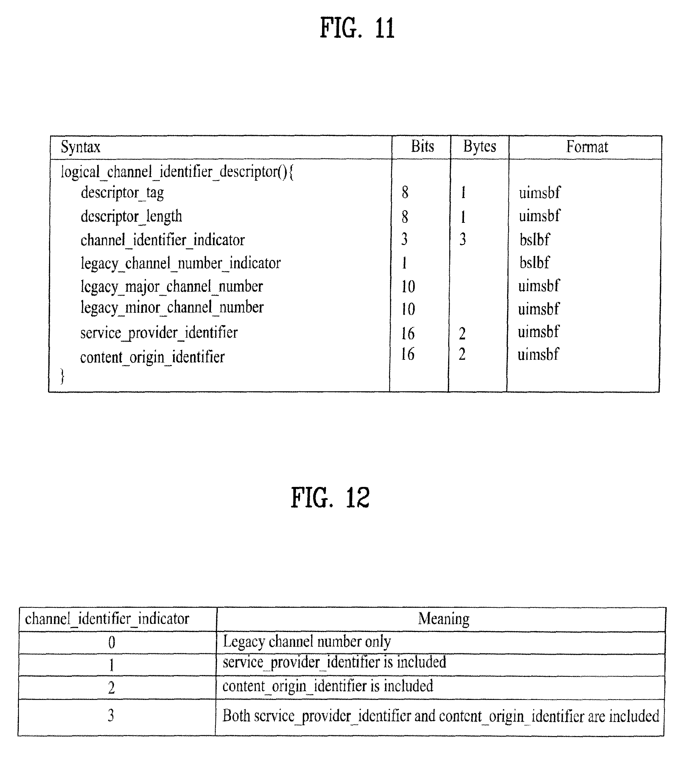

FIG. 11 shows a preferred embodiment of the syntax structure of a logical channel number descriptor according to the present invention.

Referring to FIG. 11, the logical_channel_identifier_descriptor() includes a 'descriptor_tag' field, a 'descriptor_length' field, a 'channel_identifier_indicator' field, a 'legacy_channel number_indicator' field, a 'legacy_major_channel_number' field, a 'legacy_minor_channel_number' field, a 'service_provider_identifier' field, and a 'content_origin_identifier' field.

The 'descriptor_tag' field contains information indicating a descriptor.

The 'descriptor_length' field contains information about the size of the descriptor.

FIG. 12 is a table illustrating descriptions of values which are allocated to the channel_identifier_indicator field of the logical channel number descriptor of FIG. 11.

Referring to FIG. 12, the 'channel_identifier_indicator' field may have a value of 0 to 3. In the case where the value allocated to the 'channel_identifier_indicator' field is 0, it indicates that the descriptor includes only an existing channel number. In the case where the value allocated to the 'channel_identifier_indicator' field is 1, it indicates that the descriptor includes the 'service_provider_identifier' field. In the case where the value allocated to the 'channel_identifier_indicator' field is 2, it indicates that the descriptor includes the 'content_origin_identifier' field. In the case where the value allocated to the 'channel_identifier_indicator' field is 3, it indicates that the descriptor includes the 'service_provider_identifier' field and the 'content origin_identifier' field.

The 'legacy_channel_number_indicator' field contains information indicating which one of a one-part channel number and a two-part channel number is used.

The 'legacy_major_channel_number' field contains major channel number information.

The 'legacy_minor_channel_number' field contains minor channel number information.

The 'service_provider_identifier' field contains service provider identification information.

The 'content_origin_identifier' field contains content originator identification information.

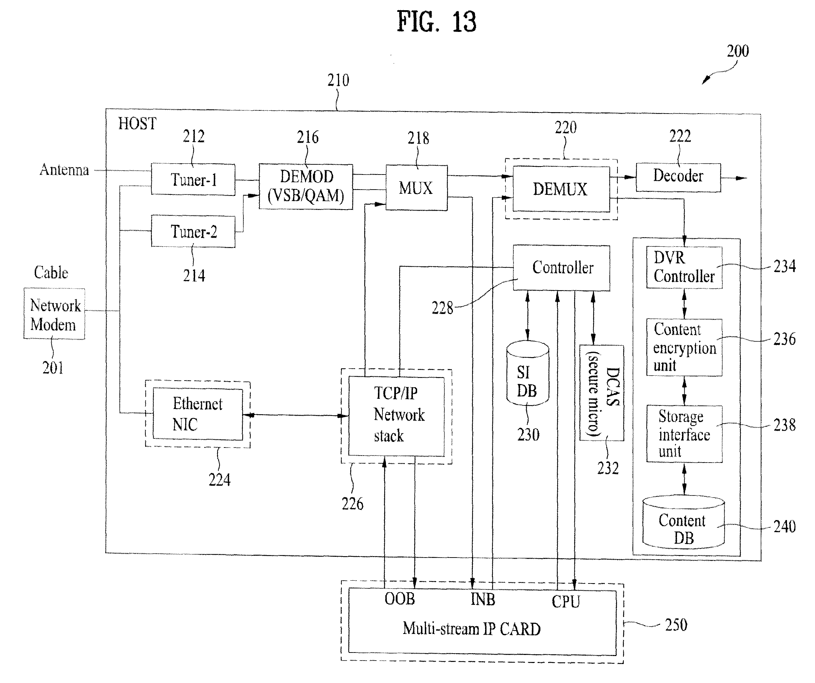

FIG. 13 is a block diagram showing the configuration of a preferred embodiment of a broadcast receiver according to the present invention.

Referring to FIG. 13, the broadcast receiver, denoted by reference numeral 200, refers to a broadcast receiver of a type capable of receiving all an IP-based IPTV service, a cable broadcast, a terrestrial broadcast, a satellite broadcast, etc. The broadcast receiver 200 may be implemented to receive only the IPTV service or receive only the cable broadcast according to different embodiments. Also, a cable card 250 mounted in the broadcast receiver may be called different names according to the different embodiments.

The broadcast receiver 200 comprises a host device 210 and a cable card 250. The host device 210 includes a tuner-1 212, tuner-2 214, demodulator 216, multiplexer 218, demultiplexer 220, decoder 222, Ethernet network interface card (NIC) 224, TCP/IP network stack 226, controller 228, system information (SI) database 230, downloadable CAS (DCAS) 232, digital video recorder (DVR) controller 234, content encryption unit 236, storage interface unit 238, and content database 240. The cable card 250 may be a single stream card capable of processing only one stream or a multi-stream card capable of simultaneously processing a plurality of streams.

The broadcast receiver 200 may be of an open cable type where a cable card including a conditional access (CA) system is separated from the body of the receiver. Also, the cable card 250 may be called a Point Of Deployment (POD) module and may be detachably mounted in a slot of the body of the broadcast receiver 200. The body into which the cable card 250 is inserted may be called a host device. That is, a combination of the cable card 250 and the host device 210 is referred to as the broadcast receiver 200.

A network modem 201 functions to connect the broadcast receiver 200 with an external network. For example, the network modem 201 may connect the broadcast receiver 200 with an external IP network. For example, in the case where a Multimedia over Coax Alliance (MoCA) is used as the network modem 201, an IP-based network may be constructed on a coaxial cable network and connected with the broadcast receiver 200. Alternatively, the broadcast receiver 200 may be connected with an external network using a DOCSIS modem. As another alternative, the broadcast receiver 200 may be connected with an external network using a wireless repeater connected with a wireless Internet network or a wired repeater connected with a wired Internet network, such as a wired ADSL repeater. The aforementioned examples of connection of the broadcast receiver 200 with the external network are nothing but embodiments, and any one thereof can be selected according to how to connect the broadcast receiver 200 with the external network.

The tuner-1 212 tunes to only an audio/video (A/V) broadcast of a specific channel frequency among terrestrial A/V broadcasts transmitted through an antenna or cable A/V broadcasts transmitted in-band through a cable connected with the network modem 201 and outputs the tuned A/V broadcast to the demodulator 216.

The demodulator 216 demodulates a terrestrial broadcast and a cable broadcast in different manners because the terrestrial broadcast and the cable broadcast are transmitted in different manners. For example, a terrestrial A/V broadcast is modulated and transmitted in a vestigial sideband modulation (VSB) manner and a cable A/V broadcast is modulated and transmitted in a quadrature amplitude modulation (QAM) manner. Therefore, the demodulator 216 demodulates the A/V broadcast of the channel frequency tuned by the tuner-1 212 in the VSB manner when it is a terrestrial broadcast, and in the QAM manner when it is a cable broadcast.

The tuner-2 214 tunes to an A/V broadcast of a specific channel frequency among the cable A/V broadcasts transmitted in-band through the cable connected with the network modem 201 and outputs the tuned A/V broadcast to the demodulator 216.

The tuner-1 212 and the tuner-2 214 may tune to signals of different channels and send the tuned signals to the demodulator 216. Alternatively, the tuner-1 212 and the tuner-2 214 may tune to different A/V streams of the same channel and send the tuned streams to the demodulator 216. For example, the tuner-1 212 may tune to a stream of a main picture and the tuner-2 214 may tune to a Picture in Picture (PIP) stream. Also, in the case where a digital video signal is stored using a digital video recorder (DVR) or the like, the user may record the video signal at the same time as watching an image, by using the tuner-1 212 and tuner-2 214.

The demodulator 216 demodulates a received signal and sends the demodulated signal to the multiplexer 218. The multiplexer 218 multiplexes and outputs signals inputted from the demodulator 216 and the TCP/IP network stack 226. For example, the multiplexer 218 may multiplex and output a main image demodulated after being tuned by the tuner-1 212 and a PIP image demodulated after being tuned by the tuner-2 214. Alternatively, according to different embodiments, the multiplexer 218 may multiplex images of different channels or multiplex and output them with an output signal from the TCP/IP network stack 226.

The multiplexer 218 outputs an input signal directly to the demultiplexer 220 when the input signal is a terrestrial broadcast signal, and to the demultiplexer 220 through the cable card 250 mounted in the slot when the input signal is a cable broadcast signal or IPTV broadcast signal. The cable card 250 includes a conditional access (CA) system for copy prevention and conditional access for high value-added broadcast contents, and is also called a Point Of Deployment (POD) module.

That is, if a received broadcast signal was scrambled, the cable card 250 descrambles the received broadcast signal and outputs the descrambled broadcast signal to the demultiplexer 220. Provided that the cable card 250 is not mounted, the A/V broadcast signal outputted from the multiplexer 218 is directly outputted to the demultiplexer 220. In this case, the user cannot normally watch a scrambled A/V broadcast signal, because the scrambled A/V broadcast signal cannot be descrambled.

The demultiplexer 220 separates a video signal and an audio signal inputted thereto from each other and outputs the separated video signal and audio signal to the decoder 222. The decoder 222 restores compressed A/V signals to original signals through a video decoding algorithm and an audio decoding algorithm, respectively, and outputs the restored signals for display and sound output thereof.

The DVR controller 234, content encryption unit 236, storage interface unit 238 and content database 240 function to store received digital data or reproduce stored data. The DVR controller 234 controls a DVR under control of the controller 228 to store selected video data, etc. among output data from the demultiplexer 220 or reproduce selected video data, etc. among stored data. The content encryption unit 236 encrypts and outputs data to be stored or decrypts and outputs data encrypted and stored. The content encryption unit 236 may not be used according to a different embodiment.

The storage interface unit 238 performs data input/output interfacing with the content database 240, and the content database 240 stores data inputted thereto.

The DCAS 232 downloads and stores conditional access systems (CASs) from a transmitting server and performs a conditional access function according to a proper one of the stored conditional access systems.

The Ethernet NIC 224 receives an Ethernet frame packet to be transmitted to a specific IP address, among signals received through the network modem 201, and sends the received packet to the TCP/IP network stack 226. Alternatively, the Ethernet NIC 224 receives data based on bidirectional communication (for example, pay program application, receiver status information, user input, etc.) from the TCP/IP network stack 226 and transmits the received data to the external network through the network modem 201. The above specific IP address may be a self IP address of the host device or an IP address of the cable card. Also, the Ethernet NIC 224 receives channel information to be transmitted to an IP network through the network modem 201. Here, the channel information includes channel information on a terrestrial/satellite/cable broadcast, as well as an IP broadcast, as stated previously. Also, the channel information includes virtual channel information and physical channel information, as stated previously.

The broadcast receiver 200 can receive an OOB message including integrated System Information (SI) on an IP network/cable/satellite/terrestrial broadcast, Emergency Alert System (EAS), extended Application Information Table (XAIT), conditional access system information and various cable card control information using a DOCSIS Settop Gateway (DSG) system or Out Of Band (OOB) system. That is, the broadcast receiver 200 can receive system information on a broadcast content transmitted over an IP network over a cable.

In the broadcast receiver 200, the host device may comprise a DOCSIS modem, an OOB tuner, etc. to receive the OOB message. For example, the broadcast receiver 200 may receive the OOB message using one of the IP system and OOB system or one of the IP system, DSG system and OOB system.

In the case of receiving the OOB message using one of the IP system and OOB system, the broadcast receiver 200 may further comprise an OOB modem, a demodulator, etc., and the POD module may act as the OOB modem. Also, in the case of receiving the OOB message using one of the IP system, DSG system and OOB system, the broadcast receiver 200 may further comprise a DOCSIS modem, an OOB modem, a switch for selecting the DSG system and OOB system, a demodulator for transmitting data to a headend according to the respective systems, and so forth.

In the case where the IP system and both of the existing DSG system and OOB system can be used or in the case where the IP system and the OOB system, with the exception of the DSG system, can be used, as stated above, a transmitter can determine which system will be used and transmit information about the determination to the cable card. The cable card 250 informs the host device 210 of an operating system based on the determination information from the transmitter. In this case, it is also possible to solve a backward compatibility problem.

For the convenience of description of the broadcast receiver 200, a description will be mainly given of a method of receiving the OOB message using the OOB tuner, not a method of receiving the OOB message, etc. through the DSG system using the DOCSIS modem or through the Ethernet NIC 224 using the IP system. In this case, the transmitter has to incorporate system information including an EMM on an IPTV broadcast and service source address information in the OOB message and transmit the resulting OOB message. Any one of the tuner-1 212 and tuner-2 214 receives the OOB message. The demodulator 216 demodulates the received OOB message and sends the demodulated OOB message to the multiplexer 218. Then, the multiplexer 218 outputs the sent OOB message to the Cable Card 250, which then transfers the OOB message to the controller 228. The exampled OOB message is nothing but one example. According to different embodiments, necessary information other than the exampled information may be added to the OOB message or unnecessary information among the exampled information may be excluded.

The TCP/IP network stack 226 routes a received packet to a destination of the packet using a TCP/IP protocol-based network stack. The TCP/IP network stack 226 supports both the TCP/IP protocol and user datagram protocol (UDP)/IP protocol.

The TCP/IP network stack 226 routes a received VOD signal or IPTV broadcast signal to the multiplexer 218. The multiplexer 218 parses a received moving picture experts group (MPEG)-based TP packet, and multiplexes and outputs the parsed TP packet to the demultiplexer 220 as stated previously. In the above example, a TP packet is received and parsed because it was assumed that an MPEG-based broadcast signal is received. However, in the case where a broadcast signal based on a different standard is received, a different unit, not the TP packet unit, may be used. Therefore, it will be understood that the spirit of the present invention is not limited to terms used in embodiments.

The TCP/IP network stack 226 sends packets whose destination is the cable card 250 to the cable card 250. An EMM message, which is one of the packets whose destination is the cable card 250, is routed and sent to the cable card 250 by the TCP/IP network stack 226. In the case where the TCP/IP network stack 226 routes a received packet to the cable card 250 and multiplexer 218, it can send data to the cable card 250 and multiplexer 218 through layer-2 routing or layer-3 routing.

In the case where the layer-2 routing is used, this routing is performed using a media access control (MAC) address system of a destination contained in a header of a received Ethernet frame. In the case where the layer-3 routing is used, this routing is performed using an IP address system of a destination contained in an IP header of a received Ethernet frame. Which one of the layer-2 routing and layer-3 routing will be used can be differently determined according to different embodiments. That is, according to the different embodiments, the layer-2 routing system may be used and the layer-3 routing system may be used.

The controller 228 controls interfacing between the host device and the cable card, data processing of the host device, and so forth. The controller 228 parses an SVCT and an NIT included in an OOB message received from the Cable Card 250 to detect channel map information therefrom, and stores the detected channel map information in the SI database 230. Then, the controller 228 displays the channel map information, receives the user's channel selection and selects a virtual channel corresponding thereto.

The controller 228 determines whether the corresponding virtual channel is an IP channel or cable channel. Here, the controller 228 can determine whether the corresponding virtual channel is an IP channel or cable channel, based on a value allocated to a 'transport_type' field included in the corresponding virtual channel.

In the case where the corresponding virtual channel is an IP channel, the controller 228 parses an IPDS and an EMMDS to detect, therefrom, information for reception of an IP service and information for reception of an EMM. Here, the IP service reception information includes at least one of resolution information about an Internet Protocol (IP) address, encapsulation information indicating IP MPEG-2 encapsulation, information about a port for receiving the IP service, information about a source IP address which provides the IP service, and information about a destination IP address to which the IP service is multicast. The EMM reception information includes at least one of transfer method information indicating a transfer method which receives the EMM, resolution information about an IP address, information about a target IP address which requests the EMM in a PULL mode, information about a source IP address which provides the IP service, and information about a destination IP address to which the IP service is multicast.

The controller 228 sets up an IP address for the IP service into any one of the source IP address and destination IP address included in the IP service reception information and sets up a port number for the IP service into the port number included in the IP service reception information, so as to perform a control operation to receive the IP service.

Also, the controller 228 determines whether the EMM transfer method is which one of an IP-based method and an OOB method, based on the transfer method information included in the EMM reception information. In the case where the EMM transfer method is the IP-based method, the controller 228 performs a control operation to receive the EMM based on the IP address information included in the EMM reception information. Here, the controller 228 determines whether to receive the EMM in which one of a PUSH mode and a PULL mode, based on the transfer method information. In the PUSH mode, the controller 228 can perform a control operation to receive the EMM based on at least one of the source IP address information and the destination IP address information. In the PULL mode, the controller 228 can perform a control operation to query and receive the EMM based on the target IP address information.

Also, the controller 228 parses a logical channel number descriptor to detect, therefrom, at least one of information indicating which one of a one-part channel number and a two-part channel number is used, major channel number information, minor channel number information, service provider identification information, and content originator identification information.

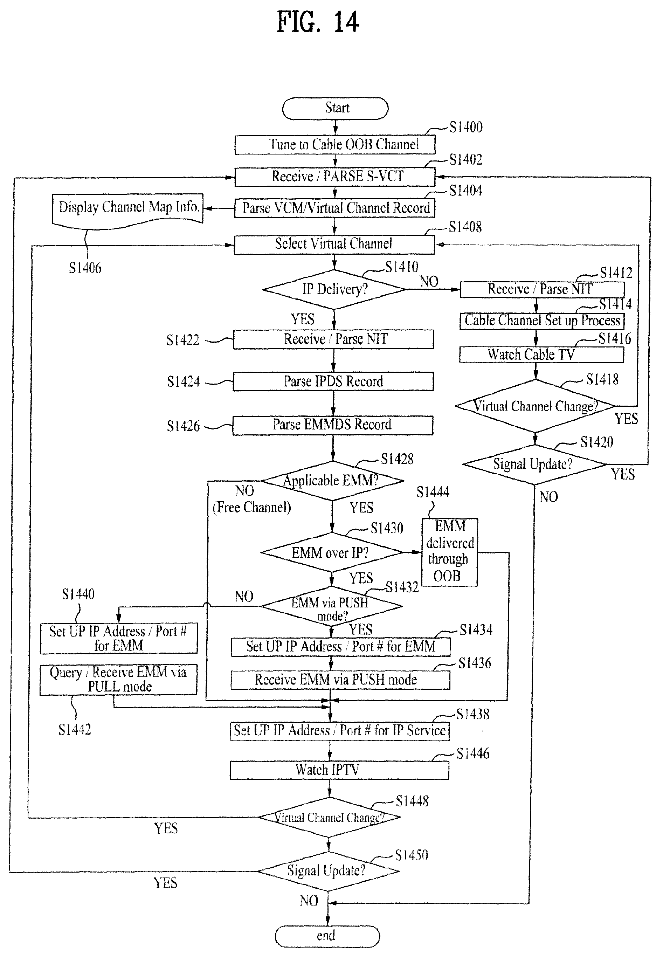

FIG. 14 is a flowchart illustrating a preferred embodiment of a system information processing process according to the present invention.

Referring to FIG. 14, the broadcast receiver 200 tunes to a cable OOB channel (S1400). Then, the broadcast receiver 200 receives and parses an SVCT (S1402). The broadcast receiver 200 parses a VCM and each virtual channel included in the VCM to obtain channel map information therefrom (S1404). Then, the broadcast receiver 200 displays the obtained channel map information (S1406).

The broadcast receiver 200 receives channel selection information from the user and selects a virtual channel corresponding thereto (S1408). Then, the broadcast receiver 200 determines whether channel_type of the corresponding virtual channel is IP_delivery (S1410).

In the case where the channel_type of the corresponding virtual channel is not the IP_delivery, the broadcast receiver 200 receives and parses an NIT (S1412). The broadcast receiver 200 performs a cable channel setup process (S1414). Then, the broadcast receiver 200 displays a cable broadcast so that the user watches the cable broadcast (S1416).

The broadcast receiver 200 determines whether there is a change in virtual channel (S1418). When there is a change in virtual channel, the broadcast receiver 200 returns to step S1408. However, when there is no change in virtual channel, the broadcast receiver 200 determines whether signaling has been updated (S1420). Upon determining that the signaling has been updated, the broadcast receiver 200 returns to step S1402.

In the case where the channel_type of the corresponding virtual channel is the IP_delivery, the broadcast receiver 200 receives and parses an NIT (S1422). Also, the broadcast receiver 200 parses an IPDS (S1424). Here, the broadcast receiver 200 can parse an IPDS indicated by a value allocated to 'IPDS_reference' included in the corresponding virtual channel.

Then, the broadcast receiver 200 parses an EMMDS included in the NIT (S1426). Here, the broadcast receiver 200 can parse an EMMDS indicated by a value allocated to 'EMMDS_reference' included in the corresponding virtual channel.

The broadcast receiver 200 determines whether an EMM is applied (S1428). Here, the broadcast receiver 200 can determine whether an EMM is applied, based on a value allocated to a 'transfer_method' field included in the EMMDS.

In the case where an EMM is applied, the broadcast receiver 200 determines whether to receive the EMM based on the IP (S1430). Here, the broadcast receiver 200 can determine whether to receive the EMM based on the IP, based on the value allocated to the 'transfer_method' field included in the EMMDS.

In the case where the EMM will be received based on the IP, the broadcast receiver 200 determines whether to receive the EMM in a PUSH mode (S1432). Here, the broadcast receiver 200 can determine whether to receive the EMM in the PUSH mode, based on the value allocated to the 'transfer_method' field included in the EMMDS. In the case where the EMM will be received in the PUSH mode, the broadcast receiver 200 sets up an IP address and a port number for reception of the EMM (S1434). Here, the broadcast receiver 200 can set up the IP address for the EMM reception based on at least one of a value allocated to a 'source_IP_Address' field included in the EMMDS and a value allocated to a 'dest_IP_Address' field included in the EMMDS. Also, whether the IP address for the EMM reception is set up based on which one of the value allocated to the 'source_IP_Address' field and the value allocated to the 'dest_IP_Address' field can be determined based on a value allocated to an 'IP_Address_resolution' field included in the EMMDS. Also, the broadcast receiver 200 can set up the port number based on the value allocated to the 'dest_IP_Address' field included in the EMMDS. Then, the broadcast receiver 200 receives the EMM in the PUSH mode (S1436).

The broadcast receiver 200 sets up an IP address and a port number for the IP service (S1438). Here, the broadcast receiver 200 can set up the IP address for the IP service based on at least one of a value allocated to a 'dest_IP_Address' field included in the IPDS and a value allocated to a 'source_IP_Address' field included in the IPDS. Also, whether the IP address for the IP service is set up based on which one of the value allocated to the 'source_IP_Address' field and the value allocated to the 'dest_IP_Address' field can be determined based on a value allocated to an 'IP_Address_resolution' field included in the IPDS.

In the case where the EMM will not be received in the PUSH mode, the broadcast receiver 200 sets up an IP address and a port number for reception of the EMM (S1440). Here, the broadcast receiver 200 can set up the IP address for the EMM reception based on a value allocated to a 'target_IP_Address' field included in the EMMDS. An IP address defined in IPv4 or an IP address defined in IPv6 can be allocated to the 'target_IP_Address' field based on the value allocated to the 'IP_Address_resolution' field included in the EMMDS. Then, the broadcast receiver 200 queries an EMM reception request and receives the EMM in a PULL mode (S1442). Then, the broadcast receiver 200 proceeds to step S1438.

In the case where the EMM will not be received based on the IP, the broadcast receiver 200 receives the EMM in an OOB mode (S1444). Then, the broadcast receiver 200 proceeds to step S1438.

In the case where no EMM is applied, the broadcast receiver 200 proceeds to step S1438.

Then, the broadcast receiver 200 displays an IP broadcast so that the user watches the IP broadcast (S1446).

Then, the broadcast receiver 200 determines whether there is a change in virtual channel (S1448). When there is a change in virtual channel, the broadcast receiver 200 returns to step S1408. However, when there is no change in virtual channel, the broadcast receiver 200 determines whether signaling has been updated (S1450). Upon determining that the signaling has been updated, the broadcast receiver 200 returns to step S1402.

As apparent from the above description, according to a broadcast receiver and system information processing method of the present invention, it is possible to efficiently provide system information, provide information associated with services provided over a terrestrial/satellite/cable/IP network in an integrated manner, and provide integrated information on the services provided over the terrestrial/satellite/cable/IP network over the cable.

In addition, it is possible to efficiently receive system information, receive information on services provided over a terrestrial/satellite/cable/IP network in an integrated manner, and receive integrated information on the services provided over the terrestrial/satellite/cable/IP network over the cable.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A broadcast receiver comprising:
a receiver for receiving entitlement management message (EMM) transfer information including information for reception of an EMM over a cable;
a network interface for transmitting and receiving data over Internet; and
a controller for parsing the received EMM transfer information to determine whether the EMM is applied, and, when the EMM is applied, identifying a transfer method included in the EMM transfer information and controlling the EMM reception through at least one of the receiver and network interface based on the identified transfer method.

2. The broadcast receiver according to claim 1, wherein the EMM transfer information includes at least one of transfer method information indicating a method which receives the EMM, resolution information about an Internet Protocol (IP) address, information about a target IP address for requesting the EMM in a PULL mode, information about a source IP address which provides an IP service, and information about a destination IP address to which the IP service is multicast.

3. The broadcast receiver according to claim 1, wherein the controller, when the transfer method is an IP-based method, performs a control operation to receive the EMM based on IP address information included in the EMM transfer information.

4. The broadcast receiver according to claim 1, wherein the receiver further receives a descriptor including at least one of service provider identification information and content originator identification information.

5. The broadcast receiver according to claim 1, wherein the receiver further receives IP service transfer information including information for reception of an IP service over the cable,
wherein the controller controls a connection to a service source which provides the IP service, based on the information included in the IP service transfer information.

6. The broadcast receiver according to claim 5, wherein the IP service transfer information includes at least one of resolution information about an IP address, encapsulation information indicating IP MPEG-2 encapsulation, information about a port for receiving the IP service, information about a source IP address which provides the IP service, and information about a destination IP address to which the IP service is multicast.

7. The broadcast receiver according to claim 5, wherein at least one of the IP service transfer information and the EMM transfer information is transmitted in a network_info_table (NIT).

8. A system information processing method comprising:
receiving entitlement management message (EMM) transfer information including information for reception of an EMM over a cable;
parsing the received EMM transfer information to determine whether the EMM is applied;
identifying a transfer method included in the EMM transfer information when the EMM is applied; and
receiving the EMM through at least one of an Internet Protocol (IP) network and the cable based on the identified transfer method.

9. The system information processing method according to claim 8, wherein the EMM transfer information includes at least one of transfer method information indicating a method which receives the EMM, resolution information about an IP address, information about a target IP address for requesting the EMM in a PULL mode, information about a source IP address which provides an IP service, and information about a destination IP address to which the IP service is multicast.

10. The system information processing method according to claim 8, wherein the step of receiving the EMM comprises receiving the EMM based on IP address information included in the EMM transfer information when the transfer method is an IP-based method.

11. The system information processing method according to claim 8, further comprising:
receiving IP service transfer information including information for reception of an IP service over the cable; and
connecting to a service source which provides the IP service, based on the information included in the IP service transfer information.

12. The system information processing method according to claim 11, wherein the IP service transfer information includes at least one of resolution information about an IP address, encapsulation information indicating IP MPEG-2 encapsulation, information about a port for receiving the IP service, information about a source IP address which provides the IP service, and information about a destination IP address to which the IP service is multicast.

13. The system information processing method according to claim 12, wherein at least one of the IP service transfer information and the EMM transfer information is transmitted in a network_info_table (NIT).

14. A system information processing method comprising:
generating entitlement management message (EMM) transfer information including information for reception of an EMM using at least one of an Internet Protocol (IP)-based method and an Out Of Band (OOB) method;
modulating the generated EMM transfer information to obtain a broadcast signal; and
transmitting the obtained broadcast signal over a cable.

15. The system information processing method according to claim 14, further comprising:
generating IP service transfer information including information for reception of an IP service;
modulating the generated IP service transfer information to obtain a broadcast signal; and
transmitting the obtained broadcast signal over the cable.
